# EUROPÄISCHE PATENTSCHRIFT

(11) **EP 1 251 043 B1**
(45) Veröffentlichungstag und Bekanntmachung des Hinweises auf die Patenterteilung: **02.02.2005**
(21) Anmeldenummer: 02007305.2
(22) Anmeldetag: 03.04.2002
(51) Int. Cl.: B60R 21/20

(54) **Baueinheit aus Gassackmodul und Fahrzeuglenkrad**
Unit comprising airbag and steering wheel
Ensemble de montage comprenant sac de sécurité gonflable et volant de véhicule

(30) Priorität: 18.04.2001 DE 20106694 U
(43) Veröffentlichungstag der Anmeldung: 23.10.2002
(73) Patentinhaber: TRW Automotive Safety Systems GmbH, 63743 Aschaffenburg (DE)
(72) Erfinder: Kreuzer, Martin, 63839 Kleinwallstadt (DE)
(74) Vertreter: Kitzhofer, Thomas, Dipl.-Ing.

(56) Entgegenhaltungen:
- PATENT ABSTRACTS OF JAPAN vol. 1998, no. 14, 31. Dezember 1998 (1998-12-31) -& JP 10 244946 A (NIPPON PLAST CO LTD), 14. September 1998 (1998-09-14)
- PATENT ABSTRACTS OF JAPAN vol. 2000, no. 01, 31. Januar 2000 (2000-01-31) -& JP 11 278194 A (NIPPON PLAST CO LTD), 12. Oktober 1999 (1999-10-12)

## Beschreibung

Die Erfindung betrifft eine Baueinheit nach dem Oberbegriff des Anspruchs 1.

Die Erfindung betrifft genauer gesagt ein sogenanntes Gassackmodul in Form eines "floating horn Moduls", d.h. ein Gassackmodul, welches axial verschieblich zum Fahrzeuglenkrad an diesem befestigt ist, um durch Drücken des Gassackmoduls zwei Hupenkontakte zu schließen.

Die Befestigung von Gassackmodulen an einer Hupenplatte geschieht in der Regel über mindestens zwei seitlich angeordnete Befestigungsschrauben. Während des Montageprozesses beim Automobilhersteller muß zur Gewährleistung des zentralen Sitzes des Moduls zum Lenkrad jeweils eine erste Schraube leicht angezogen werden, um anschließend nach Drehen des Lenkrades die zweite Schraube ebenfalls anzuziehen. Schließlich erfolgt nach erneuter Drehung des Lenkrades das Festziehen der ersten Schraube. Diese Montage ist zeitaufwendig und teuer.

Die JP 10 244 946 A offenbart eine Baueinheit mit einem Lenkrad und einem Gassackmodul nach dem Oberbegriff des Anspruchs 1. Bei dieser Baueinheit ist ein Halteteil des Lenkrades mit einer abgewinkelten Lasche versehen, die in einen Schlitz des Gassackmoduls in seitlicher Richtung quer zur Drehachse des Lenkrades eingeschoben wird und mit Hilfe einer aus seitlicher Richtung eingeführten Schraube fixiert wird. Da das Gassackmodul Lasche und Schlitz verdeckt und die Schraube festgezogen werden muß, ist auch hier die Montage noch zeitaufwendig.

Aufgabe der Erfindung ist es deshalb, eine schnelle Montage und auch eine schnelle Demontage der Baueinheit zu erreichen. Diese Aufgabe wird durch Anspruch 1 gelöst. Die erste und/oder die zweite Befestigungseinrichtung sind/ist jeweils eine vorzugsweise zerstörungsfrei lösbare Rastverbindung.

Die Schwenkbarkeit der ersten Befestigungseinrichtung erlaubt es, deren Teile in Eingriff zu bringen, ohne daß sie durch das Gassackmodul verdeckt werden, was das Zusammenfügen erleichtert und beschleunigt. Das elastische Rastelement sichert die Schwenkverbindung, so dass selbst ein großes Spiel der ersten Befestigungseinrichtung zur leichten Koppelung der Teile und zur Erzielung der Schwenkverbindung nicht nachteilig für die Positionsgenauigkeit des Moduls beim Schwenken ist. Da die zweite Befestigungseinrichtung als Rastverbindung ausgeführt ist, ist die Montage der Baueinheit bereits vollendet, wenn das Gassackmodul gegen das Lenkrad geschwenkt und dadurch verrastet worden ist, wohingegen bei der herkömmlichen Baueinheit, wenn deren Teile korrekt zueinander platziert sind, erst noch die Schraube eingeführt und festgezogen werden muß, um die Montage zu beenden.

Dementsprechend einfach ist auch die Demontage der Halteteile.

Vorzugsweise sind die beiden Halteteile nur durch Ineinanderschieben miteinander verbunden, d.h. sie sind so ausgebildet, daß das Modul auf Seiten der ersten Befestigungseinrichtung leicht gekippt in Richtung Lenkrad geführt wird und dann, wenn die beiden Halteteile nebeneinander liegen, verschoben werden muß, bis die beiden Halteteile ineinander greifen. Anschließend kann das Modul mit dem nach oben gekippten Ende in Richtung Lenkrad geschwenkt werden, bis die Rastverbindung schließt. Die Demontage kann dann einfach in Gegenrichtung erfolgen. Die Rastverbindung wird gelöst, das Modul nach oben gekippt und leicht seitlich oder radial verfahren, bis die Halteteile nicht mehr ineinander greifen.

Die erfindungsgemäße Baueinheit erlaubt es dadurch, daß nur eine Rastverbindung notwendig ist, um das Gassackmodul zu arretieren. Vorzugsweise kann auch nur eine Befestigungseinrichtung vorgesehen sein.

Vorzugsweise ist vorgesehen, daß die erste und/oder die zweite Befestigungseinrichtung so ausgebildet sind/ist, daß im arretierten Zustand des Moduls ein axiales Verschieben desselben zum Schließen der Hupenkontakte erlaubt wird. Gemäß dieser Ausführungsform ist das Modul am Lenkrad selbst oder einem lenkradfesten Teil befestigt. Bei dieser ersten Ausführungsform kann vorgesehen sein, daß ein Rückstellelement nahe der ersten Befestigungseinrichtung, welches zur Lagestabilisierung der Halteteile vorgesehen ist, zugleich das Rückstellelement zum Zurückdrängen des Moduls in die Ausgangsstellung nach Hupenbetätigung bildet.

Eine zweite Ausführungsform sieht vor, daß das Gassackmodul nicht unmittelbar am Lenkradskelett, wie bei der ersten Ausfühnmgsform, befestigt ist, sondern an einer Hupenplatte, an der das Modul über die Befestigungseinrichtungen arretiert wird. Die Hupenplatte ist zur Hupenbetätigung axial verschieblich relativ zum Lenkradskelett beweglich, so daß die Hupenplatte gemeinsam mit dem Modul vom Fahrer in Richtung Skelett gedrückt wird. Bei dieser Ausführungsform ist die Hupenplatte im Sinne des Hauptanspruchs dem Fahrzeuglenkrad zuzuordnen. Bei dieser Ausführungsform sind aber die elastischen Rückstellelemente zum Zurückdrängen des Moduls in die Ausgangsstellung einerseits und zum Lagestabilisieren der Halteteile in die verriegelte Stellung andererseits verschiedene Elemente.

Vorteilhaft ist es, wenn das Rückstellelement nahe der ersten Befestigungseinrichtung so angeordnet ist, daß es die Halteteile in eine verriegelte Stellung drückt. Dies verhindert ein Bewegen der Halteteile zueinander in eine Entriegelungsstellung, so daß das Rückstellelement eine Doppelfunktion innehat.

Im übrigen kann auch der zweiten Befestigungseinrichtung ein elastisches Rückstellelement zugeordnet sein.

Die bevorzugte Ausführungsform sieht vor, daß die erste und die zweite Befestigungseinrichtung an entgegengesetzten Außenrändern des Moduls vorgesehen sind, um die Stabilität des Moduls zu erhöhen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 einen Querschnitt durch eine erfindungsgemäße Baueinheit gemäß einer ersten Ausführungsform und
Figur 2 einen Querschnitt durch eine erfindungsgemäße Baueinheit gemäß einer zweiten Ausführungsform.

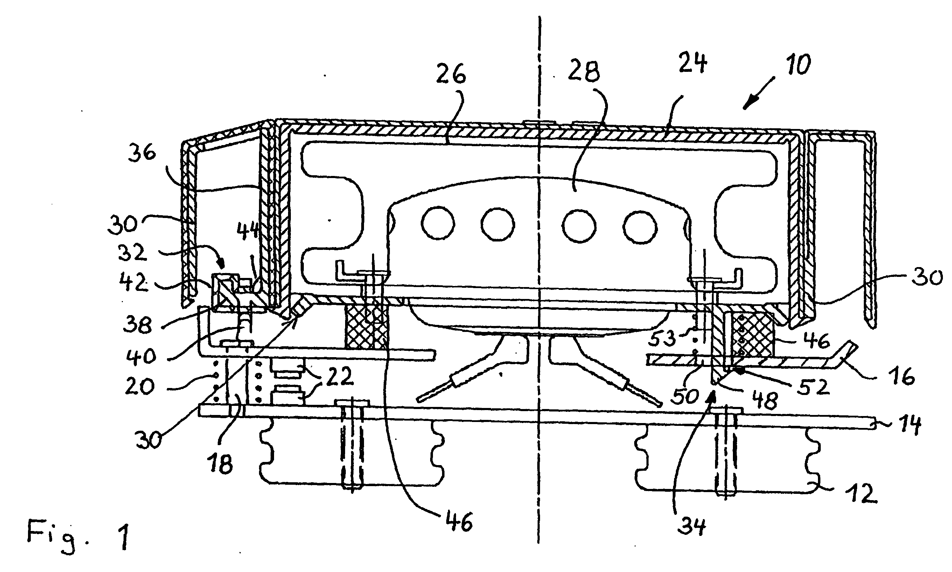

In Figur 1 ist eine erste Ausführungsform einer Baueinheit, bestehend aus einem Gassackmodul 10, einem Lenkrad und Befestigungseinrichtungen, mit denen das Gassackmodul 10 am Lenkrad befestigt ist, gezeigt. Das Lenkrad selbst wird durch ein Lenkradskelett 12, ein daran angeschraubtes Blech 14 und eine Hupenplatte 16 gebildet, die durch mehrere Stifte 18, von denen nur einer gezeigt ist, axial zum Blech 14 verschieblich gelagert ist. Um jeden Stift 18 herum sitzt ein elastisches Rückstellelement 20. An der Hupenplatte 16 und am Blech 14 sitzt jeweils ein Hupenkontakt 22, die im nicht betätigten Zustand der Hupe voneinander entfernt sind. Wenn die Hupenplatte 16 nach unten gedrückt wird, federn die elastischen Rückstellelemente 20 ein, bis die Hupenkontakte 22 geschlossen sind, also einander berühren. Die elastischen Rückstellelemente 20 drängen nach Hupenbetätigung die Hupenplatte nach oben zurück in die gezeigte Ausgangsstellung.

Das Gassackmodul 10 umfaßt einen topf-förmigen Aufnahmebehälter 24, in dem ein Gassack 26 und ein Gasgenerator 28 untergebracht sind, sowie eine Bodenplatte 30 zum Schließen des Aufnahmebehälters 24. Das Gassackmodul ist lediglich über zwei Befestigungseinrichtungen 32, 34 an der Hupenplatte 16 befestigt. Die erste Befestigungseinrichtung weist ein am Rand der Bodenplatte 30 angebrachtes erstes Halteteil 36 in Form eines radial nach außen weisenden hakenförmigen Endes, genauer gesagt eines Endes 38 in L-Form, auf. Am Lenkrad, genauer gesagt an der Hupenplatte, ist ein zweites Halteteil 40 in Form eines Bügels mit rechteckiger Aufnahmeöffnung vorgesehen. Das erste Halteteil 36 ist mit dem freien Ende 38 durch die Aufnahmeöffnung des Bügels 40 geschoben worden, so daß die Halteteile 36, 40 im gezeigten Zustand ineinander greifen. Um ein seitliches Verschieben der Halteteile 36, 40, die die erste Befestigungseinrichtung 32 bilden, zu verhindern, ist das freie Ende 38 mit einem Überzug 42 aus einem Elastomer überzogen. Der Überzug 42 verhindert darüber hinaus Klappergeräusche. Eine oder mehrere Rippen 44 am Halteteil 36 bilden einen seitlichen Anschlag, so daß das zweite Halteteil 40 seitlich zwischen dem elastischen Überzug 42 und der oder den Rippen 44 geklemmt ist.

Damit das Modul 10 im Bereich der ersten Befestigungseinrichtung 32 nicht nach unten wandert, damit das Modul 10 in Richtung axial nach oben vorgespannt und damit die Halteteile 36, 40 nicht außer Eingriff kommen, ist nahe der ersten Befestigungseinrichtung 32 ein elastisches Rückstellelement 46 zwischen Bodenplatte 30 und Hupenplatte 16 angeordnet. Das elastische Rückstellelement 46 ist bestrebt, die Halteteile 36, 40 in der gezeigten Stellung zu halten und das Modul 10 nach oben zu drücken.

An dem der ersten Befestigungseinrichtung 32 gegenüberliegenden Rand des Gassackmoduls ist die zweite Befestigungseinrichtung 34 angeordnet, die aus nur einer Rastverbindung besteht. An der Bodenplatte 30 ragt rückseitig hierzu ein Rasthaken 48 vor, der in der verriegelten Stellung durch eine Öffnung 50 in der Hupenplatte 16 ragt und die Hupenplatte 16 hintergreift. Eine elastische Bügelfeder 52, vorzugsweise in Form einer Schenkelfeder, sichert die Rastverbindung. Zusätzlich oder alternativ kann im Bereich der zweiten Befestigungseinrichtung 34 ein dem Rückstellelement 46 entsprechendes Element vorgesehen sein. Der Rasthaken 48 ist von einer Schraubenfeder 53 umgeben, die der Rückstellung des Moduls und der Lagestabilisierung der Rastverbindung dient.

Die Befestigung des Gassackmoduls 10 an der Hupenplatte 16 erfolgt dadurch, daß das Modul 10 mit dem Rand nahe des ersten Halteteils 36 mehr oder weniger stark nach unten gekippt in Richtung Hupenplatte 16 geführt und dann seitlich verschoben wird, bis das erste Halteteil 36 in das zweite Halteteil 40 eingreift. In diesem Zustand lassen die beiden Halteteile 36, 40 ein Verschwenken des Moduls mit dem Rand nahe des Rasthakens 48 nach unten zu. Der Rasthaken 48 verrastet schließlich mit der Bügelfeder 52. Bei der Montage müssen die Rückstellelemente 46 und die Bügelfeder 52 leicht zusammengedrückt werden. Nach dem Loslassen des Moduls 10 drücken sie das Modul aber wieder nach oben, so daß das Modul 10 mittels lediglich zweier Befestigungseinrichtungen 32, 34 fest an der Hupenplatte 16 arretiert ist. Die elastischen Rückstellelemente 46 sind vorzugsweise Elastomere, die auch ein seitliches Verschieben von Modul 10 zu Hupenplatte 16 sowie Klappergeräusche verhindern.

Theoretisch wäre es auch möglich, daß die Montage ohne ein Verschwenken des Moduls 10 erfolgt. Hierzu könnte das Modul 10, mit Bezug auf Figur 1, nach rechts zur Hupenplatte 16 versetzt von oben auf diese aufgesetzt werden und anschließend unter axialem Druck nach unten soweit nach links verschoben werden, bis die Rastverbindung geschlossen ist. Nach dem Loslassen würden die Rückstellelemente 46 das Modul in die gezeigte Stellung bringen.

Wenn jedoch die Halteteile 36, 40 zuerst ineinander greifen, um ein Schwenklager zu bilden, wird der Rasthaken 48 sicher in die Öffnung 50 geführt, so daß diese nicht erst wie bei der zweiten Montagemöglichkeit "gesucht" werden muß. Um eine kippsichere Schwenklagerung zu bilden, kann es nötig sein, daß die erste Befestigungseinrichtung 32 aus zwei hintereinander angeordneten Halteteilen 36, 38 oder noch weiteren derartigen Paaren gebildet ist, um die Kippgefahr für das Modul 10 zu verringern.

Da die beiden Befestigungseinrichtungen 32, 34 zerstörungsfrei lösbar sind und weil nur eine Rastverbindung vorgesehen ist, läßt sich das Modul 10 sehr schnell demontieren, indem von unterhalb der Hupenplatte 16 ein Werkzeug radial einwärts geführt wird, um die Bügelfeder 52 nach rechts in eine Freigabestellung zu drücken. Das Modul 10 wird nach oben und mit einer Schwenkbewegung von der Hupenplatte 16 gelöst.

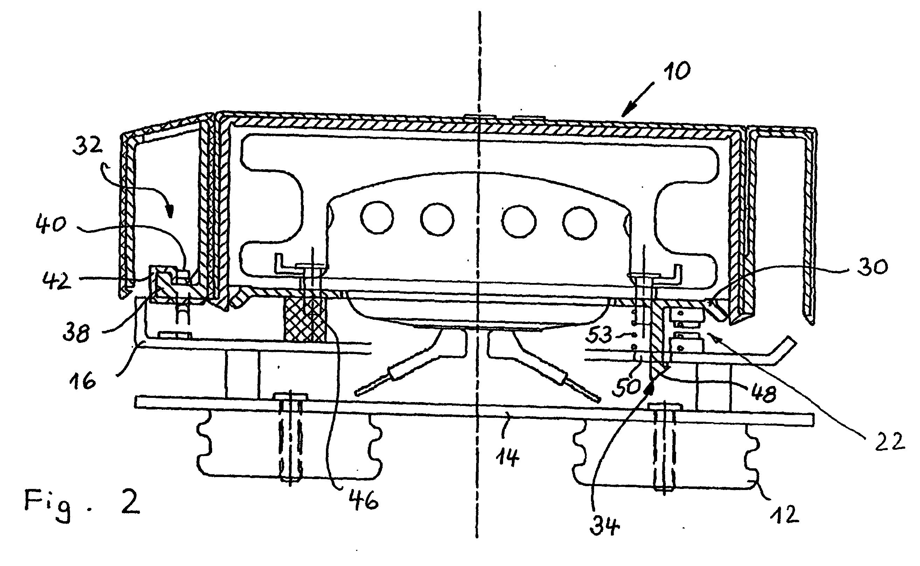

Die Ausführungsform nach Figur 2 ist der nach Figur 1 sehr ähnlich, so daß nur noch auf die Unterschiede eingegangen werden muß.

Bei dieser Ausführungsform ist die Hupenplatte 16 starr an dem Skelett 12 oder dem Blech 14 befestigt. Die Hupenplatte 16 bewegt sich deshalb bei der Betätigung der Hupe, also beim Nachuntendrücken des Moduls 10 nicht mit. Somit ist eine Axialbewegung nur zwischen dem Modul 10 und der Hupenplatte 16 möglich. Da die erste Befestigungseinrichtung 32 hier als reines Schwenklager ausgeführt ist, kann nur im Bereich der zweiten Befestigungseinrichtung 34 das Modul 10 nach unten zum Schließen der Hupenkontakte 22 gedrückt werden. Die Hupenkontakte 22 sind deshalb im Bereich der zweiten Befestigungseinrichtung 34 einerseits an der Oberseite der Hupenplatte 16 und andererseits an der Rückseite der Bodenplatte 30 vorgesehen.

Die beiden Befestigungseinrichtungen 32, 34 erlauben nicht nur das im Zusammenhang mit Figur 1 bereits erläuterte leichte Montieren und Demontieren, sondern auch ein Bewegen (Schwenken) des Gassackmoduls 10 zur Hupenplatte 16, bis die Hupenkontakte 22 geschlossen sind. Das Rückstellelement 20 aus Figur 1 kann entfallen. Seine Aufgabe übernehmen die elastischen Rückstellelemente 46 und gegebenenfalls zusätzlich das Federelement 53.

Alternativ zu der in Figur 2 gezeigten Ausführungsform können das Blech 14 und die Hupenplatte 16 weggelassen werden, so daß das Modul direkt am Skelett 12 befestigt wird. Das Skelett 12 hat hierzu das zweite Halteteil 40 sowie die Öffnung 50.

## Patentansprüche

1. Baueinheit, mit einem Gassackmodul (10),
einem Fahrzeuglenkrad und
Befestigungseinrichtungen (32, 34), mit denen das Gassackmodul (10) am Lenkrad befestigt ist,
wobei eine erste lösbare Befestigungseinrichtung (32) ein am Gassackmodul (10) vorgesehenes erstes Halteteil (36) und ein am Lenkrad vorgesehenes zweites Halteteil (40) aufweist, die ineinander greifen und ein Schwenken des Moduls (10) in Richtung Lenkrad zum Schließen einer zweiten Befestigungseinrichtung erlauben,
wobei in befestigtem Zustand des Moduls (10) ein axiales Verschieben des Moduls (10) zum Schließen von Hupkontakten (22) möglich ist
**dadurch gekennzeichnet, daß**
die zweite Befestigungseinrichtung (34) eine lösbare Rastverbindung ist und ein elastisches Rückstellelement (46) nahe der ersten Befestigungseinrichtung (32) zur Stabilisierung der Halteteile (36, 40) vorgesehen ist.

2. Baueinheit nach Anspruch 1, **dadurch gekennzeichnet, daß** die erste und/oder die zweite Befestigungseinrichtung (32, 34) so ausgebildet sind/ist, daß sie im befestigten Zustand des Moduls (10) ein axiales Verschieben des Moduls (10) zum Schließen der Hupkontakte (22) erlaubt/en.

3. Baueinheit nach Anspruch 1 oder 2, **gekennzeichnet durch** wenigstens ein elastisches Rückstellelement (20; 46) zum Zurückdrängen des Moduls (10) in eine Ausgangsstellung nach der Hupenbetätigung.

4. Baueinheit nach Anspruch 3, **dadurch gekennzeichnet, daß** das Modul (10) an einer Hupenplatte (16) befestigt ist, mit der es gemeinsam axial zum Lenkrad bei Hupenbetätigung verschieblich ist.

5. Baueinheit nach Anspruch 3 oder 4, **dadurch gekennzeichnet, daß** das Rückstellelement (46) zum Zurückdrängen des Moduls (12) und zum Stabilisieren der Halteteile (36, 40) ein gemeinsames Element ist.

6. Baueinheit nach einem der vorhergehenden Ansprüche, **dadurch gekennzeichnet, daß** nahe der zweiten Befestigungseinrichtung (34) ein dieser zugeordnetes elastisches Federelement (52) vorgesehen ist, das bestrebt ist, die zweite Befestigungseinrichtung (34) in der verriegelten Stellung zu halten und/oder das Modul (10) in eine Ausgangsstellung nach Hupenbetätigung zurückzudrängen.

7. Baueinheit nach einem der vorhergehenden Ansprüche, **dadurch gekennzeichnet, daß** die erste und die zweite Befestigungseinrichtung (32, 34) an entgegengesetzten Außenrändem des Moduls (10) vorgesehen sind.

8. Baueinheit nach einem der vorhergehenden Ansprüche, **dadurch gekennzeichnet, daß** einer der beiden Halteteile (36) ein hakenförmiges Ende (38) hat und das andere Halteteil (40) als Aufnahme für das hakenförmige Ende (38) ausgebildet ist.

9. Baueinheit nach einem der vorhergehenden Ansprüche, **dadurch gekennzeichnet, daß** wenigstens eines der Halteteile (36) einen elastischen Überzug (42) hat, der für einen festen Sitz der Halteteile (36, 40) sorgt.

10. Baueinheit nach einem der vorhergehenden Ansprüche, **dadurch gekennzeichnet, daß** nur eine Rastverbindung und/oder nur eine erste Befestigungseinrichtung (32) vorgesehen sind/ist.

## Claims

1. A unit comprising an airbag module (10),
a vehicle steering wheel, and
attachment means (32, 34) by which the airbag module (10) is attached to the steering wheel,
a first detachable attachment means (32) including a first holding part (36) provided on the airbag module (10) and a second holding part (40) provided on the steering wheel, said holding parts engaging with each other and allowing a swiveling of the module (10) towards the steering wheel in order to close a second attachment means,
the module (10), in the attached state thereof, being able to be moved axially for closing horn contacts (22),
**characterized in that**
the second attachment means (34) is a detachable latching connection, and an elastic return element (46) is provided near the first attachment means (32) for stabilizing the holding parts (36, 40).

2. The unit according to Claim 1, **characterized in that** the first and/or the second attachment means (32, 34) is/are configured in such a way that, when the module (10) is in the attached state, it can be moved axially for closing the horn contacts (22).

3. The unit according to Claim 1 or 2, **characterized by** at least one elastic return element (20; 46) to force the module (10) back into an initial position after the horn has been actuated.

4. The unit according to Claim 3, **characterized in that** the module (10) is attached to a horn plate (16) together with which it can be moved axially with respect to the steering wheel when the horn is actuated.

5. The unit according to Claim 3 or 4, **characterized in that** the return element (46) for forcing back the module (10) and for stabilizing the holding parts (36, 40) is a shared element.

6. The unit according to any of the preceding claims, **characterized in that**, near the second attachment means (34), an elastic spring element (52) associated thereto is provided that seeks to keep the second attachment means (34) in the locked position and/or to force the module (10) back into an initial position after the horn has been actuated.

7. The unit according to any of the preceding claims, **characterized in that** the first and the second attachment means (32, 24) are provided on opposite outer edges of the module (10).

8. The unit according to any of the preceding claims, **characterized in that** one of the two holding parts (36) has a hook-shaped end (38) and the other holding part (40) is configured as a receptacle for the hook-shaped end (38).

9. The unit according to any of the preceding claims, **characterized in that** at least one of the holding parts (36) has an elastic covering (42) that ensures a firm fit of the holding parts (36, 40).

10. The unit according to any of the preceding claims, **characterized in that** only one latching connection and/or only a first attachment means (32) is/are provided.

## Revendications

1. Unité de montage, comportant un module de coussin à gaz (10),
un volant de véhicule et
des moyens de fixation (32, 34) par lesquels le module de coussin à gaz (10) est fixé au volant,
un premier moyen de fixation (32) détachable présentant une première partie de retenue (36) prévue sur le module de coussin à gaz (10) et une deuxième partie de retenue (40) prévue sur le volant, lesquelles s'engagent l'une dans l'autre et permettent un pivotement du module (10) en direction du volant pour fermer un deuxième moyen de fixation,
un déplacement axial du module (10) étant possible à l'état de fixation du module (10) pour fermer des contacts de klaxon (22),
**caractérisée en ce que**
le deuxième moyen de fixation (34) est une liaison par enclenchement détachable et **en ce qu'**un élément de rappel (46) élastique est prévu à proximité du premier moyen de fixation (32) pour stabiliser les parties de retenue (36, 40).

2. Unité de montage selon la revendication 1, **caractérisée en ce que** le premier et/ou le deuxième moyen de fixation (32, 34) est/sont réalisé(s) de telle sorte qu'à l'état de fixation du module (10), il(s) permet(tent) un déplacement axial du module (10) pour fermer les contacts de klaxon (22).

3. Unité de montage selon la revendication 1 ou 2, **caractérisée par** au moins un élément de rappel (20 ; 46) élastique pour repousser le module (10) dans une position initiale après l'actionnement du klaxon.

4. Unité de montage selon la revendication 3, **caractérisée en ce que** le module (10) est fixé sur une plaque de klaxon (16) avec laquelle il peut être déplacé en commun axialement par rapport au volant lors de l'actionnement du klaxon.

5. Unité de montage selon la revendication 3 ou 4, **caractérisée en ce que** l'élément de rappel (46) pour repousser le module (10) ou pour stabiliser les parties de retenue (36, 40) est un élément commun.

6. Unité de montage selon l'une des revendications précédentes, **caractérisée en ce qu'**à proximité du deuxième moyen de fixation (34) est prévu un élément ressort (52) élastique associé à celui-ci, qui tend à maintenir le deuxième moyen de fixation (34) dans la position de verrouillage et/ou à repousser le module (10) dans une position initiale après actionnement du klaxon.

7. Unité de montage selon l'une des revendications précédentes, **caractérisée en ce que** le premier moyen de fixation (32) et le deuxième moyen de fixation (34) sont prévus sur des bords extérieurs opposés du module (10).

8. Unité de montage selon l'une des revendications précédentes, **caractérisée en ce qu'**une des deux parties de retenue (36) a une extrémité (38) en forme de crochet et l'autre partie de retenue (40) est réalisée sous forme de logement pour l'extrémité (38) en forme de crochet.

9. Unité de montage selon l'une des revendications précédentes, **caractérisée en ce qu'**au moins une des parties de retenue (36) a un revêtement (42) élastique qui assure un ajustement ferme des parties de retenue (36, 40).

10. Unité de montage selon l'une des revendications précédentes, **caractérisée en ce qu'**il n'est prévu qu'une liaison par enclenchement et/ou qu'un premier moyen de fixation (32).
